# EUROPEAN PATENT SPECIFICATION

(11) **EP 2 785 068 B1**
(45) Date of publication and mention of the grant of the patent: **08.01.2020**
(21) Application number: 14159821.9
(22) Date of filing: 14.03.2014
(51) Int. Cl.: H04N 21/262, H04N 21/24, H04L 29/06, H04N 21/234, H04L 12/825, H04N 21/845

(54) **Video image data delivery device, method and system**
Videobilddatenbereitstellungsvorrichtung, Verfahren und System
Dispositif, procédé et système de distribution de données d'image vidéo

(30) Priority: 26.03.2013 JP 2013064480
(43) Date of publication of application: 01.10.2014
(73) Proprietor: FUJITSU LIMITED, Kawasaki-shi, Kanagawa 211-8588 (JP)
(72) Inventor: Togo, Tsutomu, Kanagawa, 211-8588 (JP)
(74) Representative: Hoffmann Eitle

(56) References cited:
- US-A1- 2001 024 470
- US-A1- 2007 195 878
- US-A1- 2011 176 496
- US-B1- 6 480 541
- Ricky K. P. Mok ET AL: "QDASH: A QoE-aware DASH system", Proceeding MMSys '12 Proceedings of the 3rd Multimedia Systems Conference, 24 February 2012 (2012-02-24), pages 11-22, XP055065409, NY, USA DOI: 10.1145/2155555.2155558 ISBN: 978-1-45-031131-1 Retrieved from the Internet: URL:doi:10.1145/2155555.2155558 [retrieved on 2013-06-05]

## Description

### FIELD

The embodiments discussed herein are related to a video image data delivery device, a video image data delivery method, a storage medium storing a program, and a video image data delivery system.

### BACKGROUND

In video streaming systems that deliver video image data via a network, from a video image data delivery device storing various video image data to terminal devices, systems are known in which it is possible to switch between, for example, resolutions during video image reproduction.

MPEG-DASH (Dynamic Adaptive Streaming over HTTP) is a standard that implements such a system. In this system, the video image is divided into plural segments, with video image data encoded using respective different encoding parameters stored in the video image data delivery device such that encoding parameters such as image resolution may be switched during video image reproduction in response to changes in communication bandwidth of the network.

When, for example, the communication bandwidth changes from a wide bandwidth to a medium bandwidth during delivery of video image data for wide bandwidth to a terminal device, the video image data delivery device switches to and delivers video image data for medium bandwidth, which has lower resolution or bitrate than the video image data for wide bandwidth.

When the video image data being delivered to a terminal device is switched from the video image data for wide bandwidth to the video image data for medium bandwidth, the video image data delivery device switches to medium bandwidth video image data from the segment following the segment at which switching has been instructed. Video image data can accordingly be delivered at a quality corresponding to the communication bandwidth.

### [Related Patent Documents]

International Publication Pamphlet No. WO2004/40908
Japanese Laid-Open Patent Publication No. 2008-301309
Japanese Laid-Open Patent Publication No. 2004-153620

However, for example, at the switch from high resolution (for example, 1920 ×1080 pixels) video image data to standard resolution (720 × 480 pixels) video image data, the resolution, which is one encoding parameter, changes abruptly.

Particularly in cases where communication bandwidth changes frequently, for example, in cases in which there are frequent changes between high resolution video image data and standard resolution video image data, there are frequent abrupt changes in resolution.

Document US 6,480,541 B1 describes a method for generating a digital motion video sequence at a plurality of bit rates using a transitional coding source when switching between bitstreams having different bit rates during transmission of a video sequence. The transitional data may be frames coded using reconstructed frames reconstructed for a first bitstream using the characteristics of the second bitstream. These "low bit rate insert frames," or LBIFs, contain the image characteristics of a signal coded at the lower bit rate. With a bitstream having a higher bit rate being periodically coded using an LBIF, a point of image continuity between the two bitstreams is provided. Thus, switching from one bitstream to the other at this point in the video sequence minimizes the production of artifacts caused by differences in bit rate. In another embodiment, a separate set of transitional data is created, taking the form of "switch" frames, or S-frames. The S-frames are typically the difference between a frame of a first bitstream and a frame of a second bitstream. These frames are inserted into the decoded bitstream during the transition from one bitstream to the other, and compensate for any visual artifacts that might otherwise occur due to the difference in bit rate of the two bitstreams.

Document US 2001/024470 A1 describes a system for coding video data comprised of one or more frames coding a portion of the video data using a frame-prediction coding technique, and generating residual images based on the video data and the coded video data. The system then codes the residual images using a fine-granular scalability coding technique, and outputs the coded video data and at least one of the coded residual images to a receiver.

Document, Ricky K. P. Mok ET AL: "QDASH: A QoE-aware DASH system", Proceeding MMSys '12 Proceedings of the 3rd Multimedia Systems Conference, 24 February 2012 (2012-02-24), pages 11-22, XP055065409, NY, describes a Quality of Experience (QoE)-aware DASH system to improve the user-perceived quality of the video watching, integrating available bandwidth measurement into the video data probes with a measurement proxy architecture. An algorithm is proposed based on the fact that users prefer a gradual quality change between the best and worst quality levels, instead of an abrupt switching.

### SUMMARY

An object of one aspect of the present invention is to suppress abrupt changes to encoding parameters, even when communication bandwidth changes during video image reproduction.

According to an aspect of the embodiments, there is provided a video image data delivery device, method and computer program according to the appended claims.

### BRIEF DESCRIPTION OF DRAWINGS

Fig. 1 is a configuration diagram of a video image data delivery system according to a first exemplary embodiment;
Fig. 2 is a diagram explaining changes in communication bandwidth;
Fig. 3 is a diagram explaining replacement encoded data;
Fig. 4 is a block diagram of a computer that functions as a video image data delivery device;
Fig. 5 is a flow chart illustrating a flow of video image data delivery processing according to the first exemplary embodiment;
Fig. 6 is a diagram explaining resolution replacement;
Fig. 7 is a configuration diagram of a video image data delivery system according to a second exemplary embodiment; and
Fig. 8 is a flow chart illustrating a flow of video image data delivery processing according to the second exemplary embodiment.

### DESCRIPTION OF EMBODIMENTS

Detailed explanation follows regarding examples of exemplary embodiments of technology disclosed herein, with reference to the drawings.

### First Exemplary Embodiment

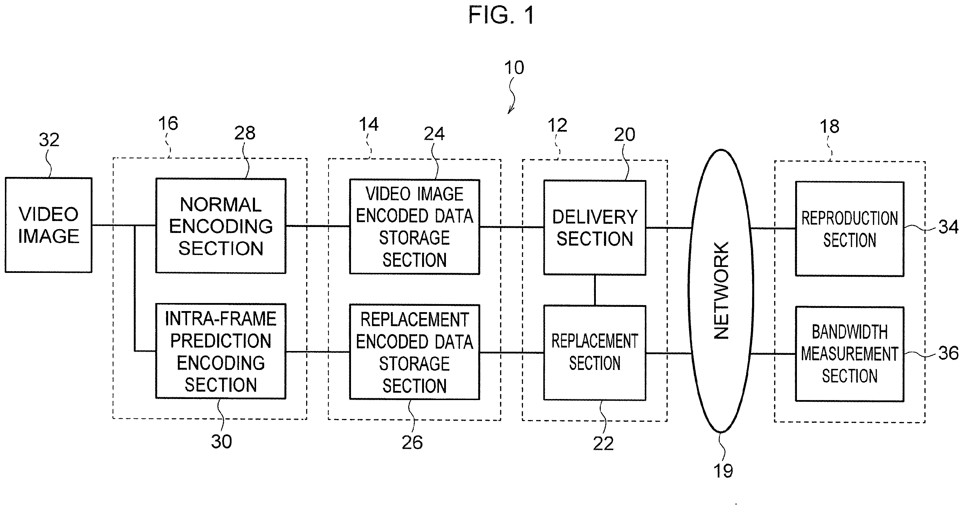

Fig. 1 illustrates a video image data delivery system 10 according to the present exemplary embodiment. The video image data delivery system 10 includes a video image data delivery device 12, a storage device 14, an encoding device 16, and a terminal device 18. The video image data delivery device 12 is connected to the terminal device 18 through a network 19. Note that the network 19 may be either a wireless communication network or a wired communication network. The network 19 is an example of a communication network of technology disclosed herein.

The video image data delivery system 10 is a system that performs video image data delivery conforming to a predetermined video streaming standard, for example MPEG-DASH standard.

The terminal device 18 is a device such as a high definition television, a personal computer, a smartphone or a mobile telephone provided with a function of communicating with the video image data delivery device 12, and a reproduction function for video images delivered from the video image data delivery device 12.

The video image data delivery device 12 includes a delivery section 20 and a replacement section 22. The storage device 14 includes a video image encoded data storage section 24 and a replacement encoded data storage section 26.

The encoding device 16 includes a normal encoding section 28 and an intra-frame prediction encoding section 30. The normal encoding section 28 respectively encodes plural frame images included in a video image 32 using a predetermined encoding method with plural different predetermined encoding parameters to store video image encoded data in the video image encoded data storage section 24 for each set of encoding parameters. Note that in the present exemplary embodiment, the predetermined encoding method is for example an encoding method conforming to the MPEG-DASH standard.

For a single video image source 32, plural sets of video image encoded data with different encoding parameters are accordingly stored in the video image encoded data storage section 24 for each encoding parameter(s). In the present exemplary embodiment, the encoding parameters include for example resolution, or frame rate, or both.

In the present exemplary embodiment, the video image encoded data storage section 24 is stored with video image encoded data encoded at predetermined resolutions A1 to Ai as video image encoded data for use respectively with wide bandwidth, medium bandwidth, and narrow bandwidth communication bandwidths of the network 19 in communication with the terminal device 18. Note that i is an integer of 2 or greater, with the resolution becoming lower the greater the value of i. In the present exemplary embodiment, explanation is given regarding an example in which i = 3. Namely, video image encoded data encoded at predetermined resolutions A1, A2, A3 are stored in the video image encoded data storage section 24.

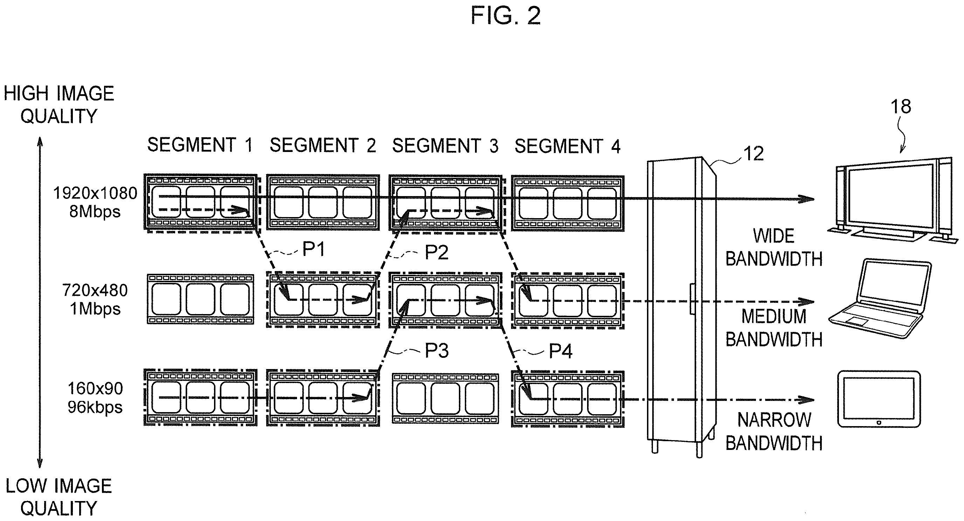

As illustrated in Fig. 2, the video image encoded data storage section 24 is stored with video image encoded data encoded at a resolution of for example 1920 × 1080 pixels as the resolution A1 for use when the communication bandwidth is a wide bandwidth.

In the present exemplary embodiment, the communication bandwidth refers to a maximum volume of data transferred per unit of time, such as a bit rate. In the present exemplary embodiment, a wide bandwidth communication bandwidth refers for example to a bandwidth of 5 Mbps or above, and mainly refers to cases in which communication is possible at a bit rate in the region of 8 Mbps, however the range of wide bandwidth is not limited thereto.

As illustrated in Fig. 2, the video image encoded data storage section 24 is stored with video image encoded data encoded at a resolution of for example 720 × 480 pixels as the resolution A2 for use when the communication bandwidth is a medium bandwidth. Note that in the present exemplary embodiment, a medium bandwidth communication bandwidth refers for example to a bandwidth of 480 kbps or above and less than 5 Mbps, and mainly refers to cases in which communication is possible at a bit rate in the region of 1 Mbps, however the range of medium bandwidth is not limited thereto.

As illustrated in Fig. 2, the video image encoded data storage section 24 is stored with video image encoded data encoded at a resolution of for example 160 × 90 pixels as the resolution A3 for use when the communication bandwidth is a narrow bandwidth. Note that in the present exemplary embodiment, a narrow bandwidth communication bandwidth refers for example to a bandwidth of below 480 kbps, and mainly refers to cases in which communication is possible at a bit rate in the region of 96 kbps, however the range of narrow bandwidth is not limited thereto.

Note that in the present exemplary embodiment, the frame rate of the respective video image encoded data for use with each of wide bandwidth, medium bandwidth, and narrow bandwidth, is for example 30 fps. Moreover, the resolutions A1 to A3 are merely examples, and there is no limitation thereto.

When the video image 32 has been segmented into plural segments, the intra-frame prediction encoding section 30 respectively performs intra-frame prediction encoding at plural replacement resolutions, that are different to replacement resolutions A1 to A3, for replacement target frame images of a portion of each segment that is the final frame image and consecutive previous frames. Namely, intra prediction encoding is performed.

Intra-frame prediction encoding is an encoding method wherein within a single frame image, data of pixels peripheral to those that have already been encoded are employed, with the differences therebetween quantized. Encoded data that has been encoded with intra-frame prediction encoding enables the original frame image to be decoded without reference to other chronologically preceding and subsequent frame images, as what is referred to as an I picture.

The intra-frame prediction encoding section 30 stores encoded data on which intra-frame prediction encoding has been performed as replacement encoded data in the replacement encoded data storage section 26.

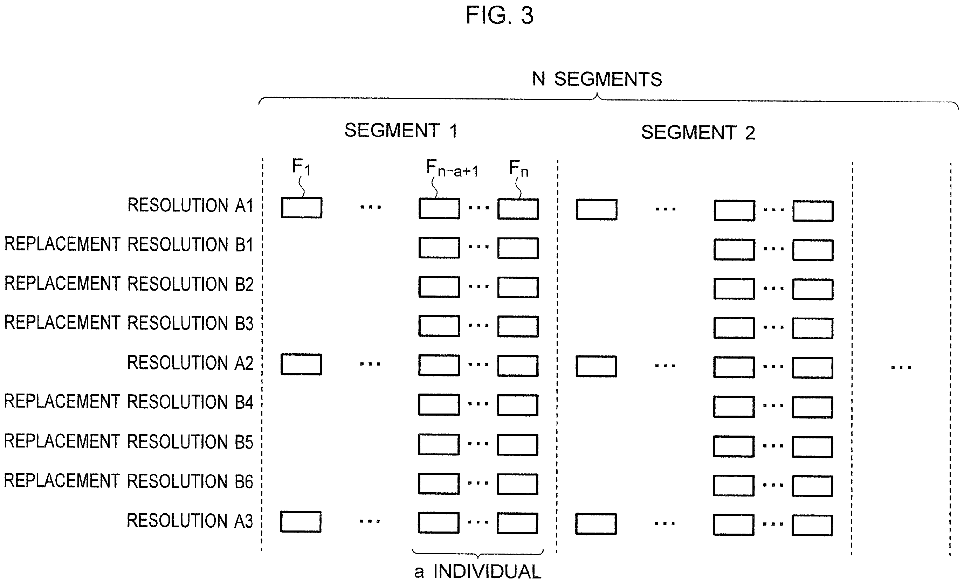

As illustrated in for example Fig. 3, when a video image has been segmented into N segments 1 to N at every n individual frame images F₁ to Fₙ, intra-frame prediction encoding is performed at replacement resolutions B1 to Bj on a predetermined number a of individual replacement target frame images that consecutively proceed the final frame image Fₙ. Note that j is an integer of (i-1) or greater, and the greater the value of j, the lower the resolution. In the present exemplary embodiment, explanation is given regarding a case in which j = 6.

The replacement resolutions B 1 to B6 are different resolutions to the respective resolutions A1 to A3. For example, when a = 5, intra-frame prediction encoding is performed on frame images Fₙ₋₄ to Fₙ at the resolutions B1 to B6, and stored in the replacement encoded data storage section 26. Note that a is set at a value that enables a strange sensation caused by switching between resolutions to be suppressed from being imparted to a user. For example, delivery tests are performed on the video image encoded data changing the value of a to various different values to set a value capable of suppressing a feeling of discomfort to the user even when the communication bandwidth changes and the resolution is switched.

The replacement resolutions B 1 to B3 are resolutions that change in steps between the resolutions A1 to A2. For example, the replacement resolution B1 is 1440 × 1080 pixels, the replacement resolution B2 is 1280 × 720 pixels, and the replacement resolution B3 is 960 × 540 pixels, however there is no limitation thereto.

The replacement resolutions B4 to B6 are resolutions that change in steps between the resolutions A2 to A3. For example, the replacement resolution B4 is 640 × 480 pixels, the replacement resolution B5 is 320 × 240 pixels, and the replacement resolution B6 is 240 × 180 pixels, however there is no limitation thereto.

Note that the frame images on which intra-frame prediction encoding is performed are preferably frame images of a consecutive portion in a latter half of each segment. Namely, a is preferably an integer that satisfies a< n/2.

Accordingly, storing and holding replacement encoded data for replacement target frame images of a consecutive portion in a latter half of each segment enables an increase in the replacement encoded data storage section 26 capacity to be suppressed.

Moreover, in the present exemplary embodiment, since all of the replacement encoded data configures I pictures, the degree of changes in resolution can be regulated easily.

The delivery section 20 of the video image data delivery device 12 reads video image encoded data from the video image encoded data storage section 24 at a resolution corresponding to the communication bandwidth of the communication over the network 19 with the connected terminal device 18. The delivery section 20 performs streaming delivery of the read video image encoded data to the terminal device 18.

Upon instruction by the terminal device 18 to switch to delivery of video image encoded data at a different resolution due to a change in the communication bandwidth, the replacement section 22 of the video image data delivery device 12 reads the replacement encoded data from the replacement encoded data storage section 26.

The replacement encoded data that are read are the replacement target frame images encoded at replacement resolutions that change in steps between a resolution corresponding to the communication bandwidth prior to the communication bandwidth changing and a resolution corresponding to the communication bandwidth after the communication bandwidth has changed.

In cases in which the video image 32 has been segmented into plural segments, the replacement section 22 replaces the replacement target frame image video image encoded data of the portion that consecutively proceeds the final frame image of the segment for which switching has been instructed with the read replacement encoded data.

The terminal device 18 includes a reproduction section 34 and a bandwidth measurement section 36. The reproduction section 34 requests video image encoded data from the video image data delivery device 12 at a resolution instructed by the user. The reproduction section 34 also decodes the video image encoded data delivered from the video image data delivery device 12, and performs reproduction of the decoded video image.

The bandwidth measurement section 36 periodically measures the bit rate as the communication bandwidth of communication with the video image data delivery device 12.

Specifically, when for example send time data expressing a send time has been received from the video image data delivery device 12, the bandwidth measurement section 36 computes a communication duration of the send time data based on the reception time and the send time, and computes the bit rate based on the computed communication duration and the data volume of the send time data. In the present exemplary embodiment, explanation is given regarding a case in which send time data are inserted at predetermined intervals into the video image encoded data delivered from the video image data delivery device 12.

The bandwidth measurement section 36 determines into which bandwidth the computed bit rate falls out of the predetermined wide bandwidth, medium bandwidth and narrow bandwidth. When there has been a change in the bandwidth, the bandwidth measurement section 36 instructs the replacement section 22 of the video data delivery device 12 to switch the resolution so as to deliver video image encoded data at a resolution corresponding to the changed bandwidth. Specifically, the bandwidth measurement section 36 instructs a switch in resolution by sending communication bandwidth data to the replacement section 22 to indicate which the communication bandwidth should be after switching, wide bandwidth, medium bandwidth or narrow bandwidth.

Note that a switch in resolution is preferably not requested immediately after the communication bandwidth changes, but is instead preferably requested when the same communication bandwidth has persisted for a specific duration or greater following a change in communication bandwidth. It is accordingly possible to prevent a momentary switch in resolution in cases in which, for example, the communication bandwidth only momentarily changes from wide bandwidth to medium bandwidth, and then immediately back to wide bandwidth.

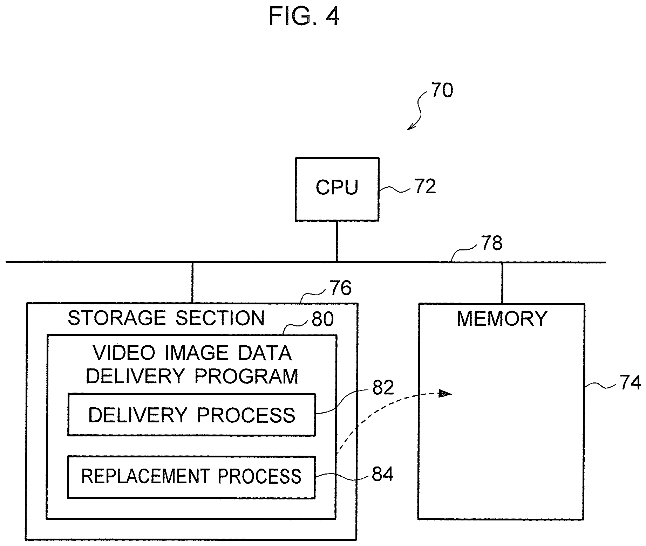

The video image data delivery device 12 may be implemented by a computer 70, for example as illustrated in Fig. 4. The computer 70 includes a CPU 72, memory 74, and a non-volatile storage section 76. The CPU 72, the memory 74, and the storage section 76 are mutually connected together through a bus 78.

The storage section 76 may for example be implemented by a Hard Disk Drive (HDD) or by flash memory. The storage section 76, serving as a storage medium, is stored with a video image data delivery program 80 that causes the computer 70 to function as the video image data delivery device 12. The CPU 72 reads the video image data delivery program 80 from the storage section 76, expands the program in the memory 74, and sequentially executes processes of the video image data delivery program 80.

The video image data delivery program 80 includes a delivery process 82 and a replacement process 84.

The CPU 72 operates as the delivery section 20 illustrated in Fig. 1 by executing the delivery process 82. The CPU 72 operates as the replacement section 22 illustrated in Fig. 1 by executing the replacement process 84.

The computer 70 executing the video image data delivery program 80 thereby functions as the video image data delivery device 12. Note that the video image data delivery program 80 is an example of the video image data delivery program of technology disclosed herein.

Note that it is also possible to implement the video image data delivery device 12 by for example a semiconductor integrated circuit, and more specifically by for example an Application Specific Integrated Circuit (ASIC).

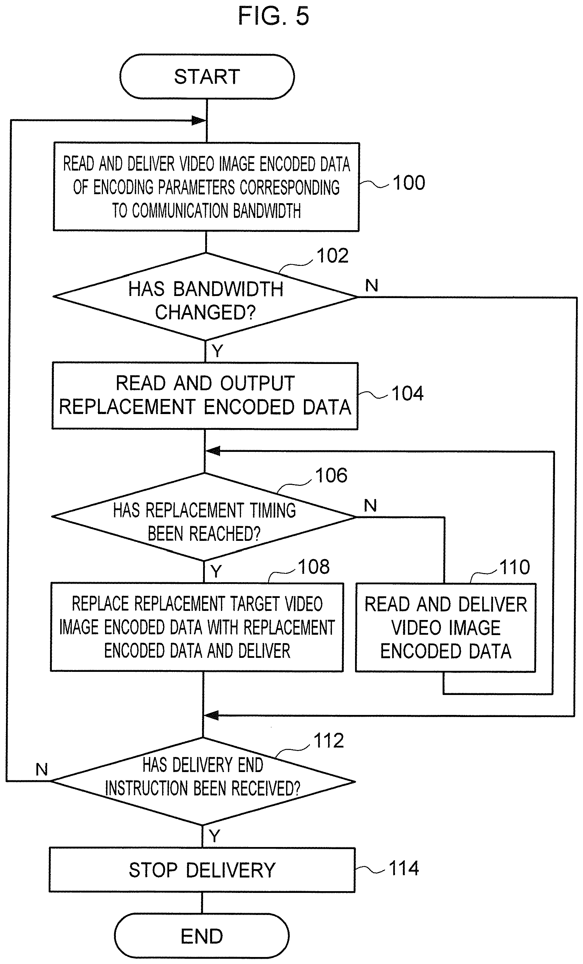

Explanation follows regarding operation of the present exemplary embodiment. In the video image data delivery device 12 according to the present exemplary embodiment, the video image data delivery processing illustrated in Fig. 5 is executed upon receipt from the terminal device 18 of a request for video image encoded data delivery at encoding parameters stipulated by a user. Note that explanation is given regarding a case in which resolution is the encoding parameter varied according to changes in the communication bandwidth.

At step 100, the delivery section 20 reads video image encoded data from the video image encoded data storage section 24 in predetermined units at the resolution requested by the terminal device 18, and performs streaming delivery to the terminal device 18. Note that the predetermined units may for example be configured as units of several frames to several tens of frames, however there is no limitation thereto.

Upon receipt of the send time data contained in the video image encoded data, the bandwidth measurement section 36 of the terminal device 18 measures the communication bandwidth by computing the bit rate based on the reception time and the send time expressed by the send time data. When there has been a change in the communication bandwidth , the bandwidth measurement section 36 instructs a switch in resolution by sending communication bandwidth data to the replacement section 22 expressing the changed communication bandwidth.

At step 102, the replacement section 22 determines whether or not the communication bandwidth has changed by determining whether or not a communication bandwidth data has been received as a resolution switching instruction from the terminal device 18. When the communication bandwidth has changed, namely when a resolution switch has been instructed, the processing transitions to step 104, and when a resolution switch has not been instructed, processing transitions to step 112.

At step 104, the replacement section 22 reads from the replacement encoded data storage section 26 the replacement encoded data for the replacement target frame images encoded at the replacement resolutions that change in steps between the resolution for the communication bandwidth prior to changing and the resolution for the communication bandwidth after changing, and outputs the replacement encoded data to the delivery section 20.

At step 106, the delivery section 20 determines whether or not a replacement timing has been reached. Namely, the delivery section 20 determines whether or not a timing has been reached for delivery of the encoded video image encoded data of the replacement target frame images of the portion of the segment that is the final frame image and consecutive previous frames. Processing transitions to step 108 when the replacement timing has been reached, and processing transitions to step 110 when the replacement timing has not been reached.

At step 108, the delivery section 20 performs streaming delivery of the replacement encoded data output from the replacement section 22 to the terminal device 18 to replace the encoded video image encoded data for the replacement target frame images.

For example, in segment 1 illustrated in Fig. 2, the initial communication bandwidth is wide bandwidth, and video image encoded data at the resolution A1 of 1920 × 1080 pixels is delivered to the terminal device 18.

As indicated by the arrow P1 in Fig. 2, when the communication bandwidth changes to medium bandwidth during delivery of the resolution A1 video image encoded data for segment 1, from segment 2 onward there is a need to switch to delivery of resolution A2 video image encoded data at 720 × 480 pixels to the terminal device 18.

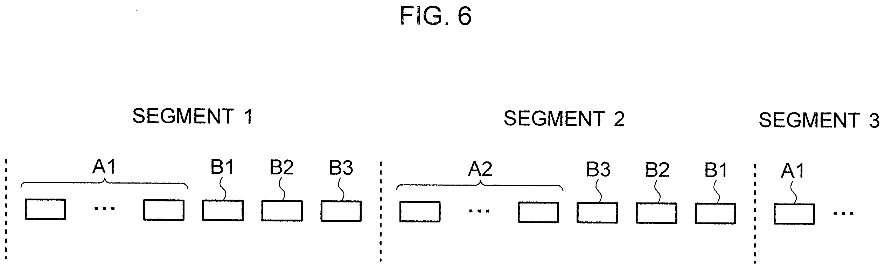

When this occurs, as illustrated in Fig. 6, the video image encoded data of the a individual frame images including the final frame image of segment 1 are replaced with the replacement encoded data encoded at the replacement resolutions B1 to B3. Note that Fig. 6 illustrates a case in which a = 3, with one frame image at each of the replacement resolutions B1 to B3, however configuration may be made with plural frame images for each of the replacement resolutions B1 to B3. For example, a = 9 when there are 3 frame images for each of the replacement resolutions B1 to B3.

On transition from segment 1 to segment 2, a decrease in resolution occurs in steps in the sequence resolution A1, B1, B2, B3, with resolution A2 adopted from segment 2 onward. This thereby enables an abrupt change in the resolution of the video image being reproduced on the terminal device 18 to be suppressed.

Moreover, as indicated by the arrow P2 in Fig. 2, in a case in which the communication bandwidth changes to wide bandwidth during delivery of the resolution A2 video image encoded data for segment 2, from segment 3 onward there is a need to switch to delivery of resolution A1 video image encoded data at 1920 × 1080 pixels to the terminal device 18.

When this occurs, as illustrated in Fig. 6, the video image encoded data of the a individual replacement target frame images including the final frame image of segment 2 are replaced with the replacement encoded data encoded at the replacement resolutions B3 to B1.

At transition from segment 2 to segment 3, an increase accordingly occurs in step in resolution in the sequence resolution A2, B3, B2, B1, with resolution A1 delivered from segment 3 onward. This thereby enables an abrupt change in the resolution of the video image being reproduced on the terminal device 18 to be suppressed.

Note that similar is performed when the communication bandwidth changes from narrow bandwidth to medium bandwidth. For example, as indicated by the arrow P3 in Fig. 2, when the communication bandwidth changes from narrow bandwidth to medium bandwidth at segment 2, there is a need to switch to resolution A2 video image encoded data at 720 × 480 pixels from segment 3 onward.

When this occurs, the video image encoded data of the a individual replacement target frame images including the final frame image of segment 2 are replaced with the replacement encoded data encoded at the replacement resolutions B6 to B4.

At transition from segment 2 to segment 3, a increase accordingly occurs in steps in resolution in the sequence resolution A3, B6, B5, B4, with resolution A2 delivered from segment 3 onward.

As for example indicated by the arrow P4 in Fig. 2, when the communication bandwidth changes from medium bandwidth to narrow bandwidth at segment 3, there is a need to switch to resolution A3 video image encoded data at 160 × 90 pixels from segment 4 onward.

When this occurs, the video image encoded data of the a individual replacement target frame images including the final frame image of segment 3 are replaced by the replacement encoded data encoded at the replacement resolutions B4 to B6.

At transition from segment 3 to segment 4, a decrease accordingly occurs in steps in resolution in the sequence resolution A2, B4, B5, B6, with resolution A3 delivered from segment 4 onward.

However, when determined at step 106 that a replacement timing has not been reached, at step 110 the delivery section 20 reads 1 frame of video image encoded data from the video image encoded data storage section 24 and delivers this 1 frame of video image encoded data to the terminal device 18. The processing of step 110 is repeated until determined at step 106 that a replacement timing has been reached.

At step 112, the delivery section 20 determines whether or not a video image encoded data delivery end instruction has been received from the terminal device 18. When an end instruction has not been received from the terminal device 18, processing returns to step 100, and streaming delivery of further video image encoded data continues. However, when an end instruction has been received from the terminal device 18, processing transitions to step 114, streaming delivery of video image encoded data is stopped, and the present routine is ended.

Accordingly, when the communication bandwidth changes and resolution switch has been instructed, the replacement target frame image video image encoded data of the portion of the segment that is the final frame image and consecutive previous frames of the segment for which resolution switch has been instructed is replaced with the replacement encoded data and delivered. This thereby enables an abrupt change in the resolution of the video image being reproduced on the terminal device 18 to be suppressed.

Note that configuration may be made such that replacement encoded data is respectively encoded at plural replacement resolutions and stored in the replacement encoded data storage section 26 for the replacement target frame images in a portion of each segment that is the first frame image and consecutive subsequent frames of the segment. In such cases, when a resolution switch has been instructed, the replacement target frame image video image encoded data in the portion that includes the first frame image and subsequent consecutive frames of the segment following the segment for which a resolution switch has been instructed, may be replaced with the replacement encoded data and streaming delivery performed. Moreover, the replacement target frame images may also be set partway through each segment, or may be set so as to straddle across segments. Namely, replacement target frame images may be set in respective portions of each segment, and video image encoded data for replacement target frame images due to be delivered first after instruction of a switch replaced with the replacement encoded data.

Note that in the present exemplary embodiment, explanation has been given regarding a case in which the frame rate is fixed regardless of the communication bandwidth, and the resolution is changed in steps, however configuration may be made wherein the resolution is fixed regardless of the communication bandwidth, and the frame rate is changed in steps.

In such cases, for example with the resolution fixed at A1, video image encoded data encoded at respective predetermined frame rates C1, C2, C3 is stored in the video image encoded data storage section 24 as the video image encoded data for use with the respective wide bandwidth, medium bandwidth or narrow bandwidth communication bandwidth. Note that C1> C2> C3.

Moreover, with the resolution fixed at A1, intra-frame prediction encoded replacement encoded data for the video image 32 is stored in the replacement encoded data storage section 26 at frame rates D1 to D3 change in steps between the frame rates C1 and C2.

Moreover, with the resolution fixed at A1, intra-frame prediction encoded replacement encoded data for the video image 32 is stored in the replacement encoded data storage section 26 at frame rates D4 to D6 change in steps between the frame rates C2 and C3. Note that D1> D2> D3> D4> D5> D6.

The frame rates C1, C2, C3 may for example be set at 30 fps, 10 fps, 1 fps. In such a configuration, the frame rates D1, D2, D3 may for example be set at 24 fps, 18 fps, 15 fps, and the frame rates D4, D5, D6 may for example be set at 8 fps, 6 fps, 3 fps. Note that the values of the frame rates are not limited thereto.

When the communication bandwidth changes and a frame rate switch has been instructed, video image encoded data of frame images in a portion of each segment, that is the final frame image and consecutive previous frames of the segment for which a frame rate switch has been instructed, are replaced with replacement encoded data and delivered.

For example, when the communication bandwidth changes from wide bandwidth to medium bandwidth at segment 1, video image encoded data of the a individual consecutive frame images that include the final frame image of the changed segment are replaced by the replacement encoded data encoded at the replacement frame rates D1 to D3.

At transition from segment 1 to segment 2, a step-wise reduction in frame rate accordingly occurs in the sequence frame rate C1, D1, D2, D3, with frame rate C2 delivered from segment 2 onward. This thereby enables an abrupt change in the frame rate of the video image being reproduced on the terminal device 18 to be suppressed.

Note that configuration may be made such that, out of the plural replacement frame rates, some of the replacement frame rates are replaced with thinned replacement encoded data of other higher replacement frame rates than the replacement frame rate in question. Specifically, out of the plural replacement frame rates, when there is a replacement frame rate present that is a divisor of a given other replacement frame rates, this replacement frame rate may be replaced with thinned replacement encoded data of the given other replacement frame rate.

For example, the above replacement frame rates D4 (8 fps), D5 (6 fps), D6 (3 fps) are respectively divisors of the replacement frame rate D1 (24 fps). Namely, the replacement frame rates D4, D5, D6 are respectively frame rates of 1/3, 1/4, and 1/8 of the replacement frame rate D1. Accordingly, encoded data of each frame image included in the replacement encoded data of replacement frame rate D1 may be thinned and replaced at uniform intervals of 1/3, 1/4, and 1/8. The need to pre-store replacement encoded data for the replacement frame rates D4 to D6 in the replacement encoded data storage section 26 can accordingly be dispensed with, enabling an increase the replacement encoded data storage section 26 capacity to be suppressed. Moreover, thinning frame images at uniform intervals enables unevenness in changes in frame rate to be suppressed.

Moreover, when there is a change in communication bandwidth, the video image encoded data of the frame images of the portion of the segment that is the final frame image and consecutive previous frames of the changed segment may be replaced and delivered by replacement encoded data that changes in steps in both resolution and frame rate.

In such a configuration, video image encoded data of the video image 32 encoded at the resolution A1 and the frame rate C1 may be stored in the video image encoded data storage section 24 as the video image encoded data for when the communication bandwidth is wide bandwidth. Video image encoded data of the video image 32 encoded at the resolution A2 and the frame rate C2 may be stored in the video image encoded data storage section 24 as the video image encoded data for when the communication bandwidth is medium bandwidth. Moreover, video image encoded data of the video image 32 encoded at the resolution A3 and the frame rate C3 may be stored in the video image encoded data storage section 24 as the video image encoded data for when the communication bandwidth is narrow bandwidth.

Moreover, the replacement encoded data storage section 26 is stored with intra-frame prediction encoded replacement encoded data of the video image 32 at resolutions and frame rates to give step-wise changes in both resolution and frame rate from wide bandwidth to medium bandwidth, and from medium bandwidth to narrow bandwidth.

For example, the replacement encoded data storage section 26 is stored with replacement encoded data changing in both resolution and frame rate in the sequence: resolution B1 with frame rate D1; resolution B2 with frame rate D2; resolution B3 with frame rate D3. The replacement encoded data storage section 26 is moreover stored with replacement encoded data changing in both resolution and frame rate in the sequence: resolution B4 with frame rate D4; resolution B5 with frame rate D5; resolution B6 with frame rate D6.

When the communication bandwidth changes and a switch in resolution and frame rate has been instructed, the video image encoded data of the frame images of the portion of the segment that is the final frame image and consecutive previous frames of the segment for which switching has been instructed are replaced with the replacement encoded data.

For example, when the communication bandwidth changes from wide bandwidth to medium bandwidth at segment 1, the video image encoded data of the a individual frame images including the final frame image of segment 1 is replaced by the respective replacement encoded data changing in sequence through resolutions B1 to B3 and through frame rates D1 to D3.

At transition from segment 1 to segment 2, there is a decrease in resolution in steps in the sequence resolution A1, B1, B2, B3, and a decrease in frame rate occurs in steps in the sequence frame rate C1, D1, D2, D3, with resolution A2 and frame rate C2 then delivered from segment 2 onward. This thereby enables an abrupt change in the resolution and frame rate of the video image being reproduced on the terminal device 18 to be suppressed.

### Second Exemplary Embodiment

Explanation follows regarding a second exemplary embodiment of technology disclosed herein. Note that portions similar to those of the first exemplary embodiment are allocated the same reference numerals and explanation thereof is omitted, with explanation focusing on portions that differ from the first exemplary embodiment.

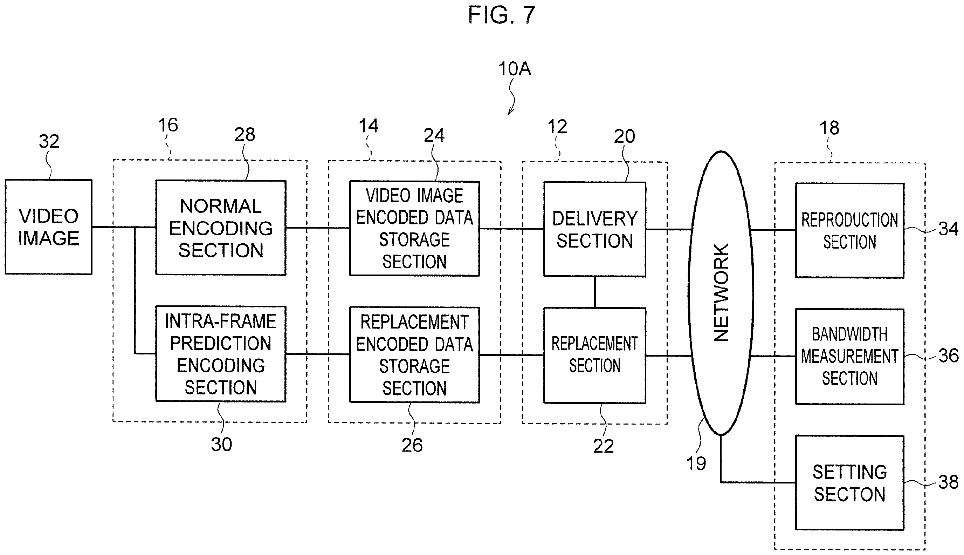

Fig. 7 illustrates a video image data delivery system 10A according to the second exemplary embodiment.

The video image data delivery system 10A differs from the video image data delivery system 10 illustrated in Fig. 1 in the provision of a setting section 38 to the terminal device 18. The video image data delivery system 10A is similar to the video image data delivery system 10 in other respects, and detailed explanation thereof is omitted.

The setting section 38 sets as a video image viewing mode for delivery, priority data indicating which to prioritize out of image quality or reproduction smoothness, and transmits the priority data to the video image data delivery device 12. The priority data is for example set by user operation. The user is able to set priority for image quality for reproduction of a video image of for example scenery shots, in which it is desirable to prioritize image quality, and the user is able to set priority for smoothness in a video image of for example sport shots, in which it is desirable to prioritize smoothness.

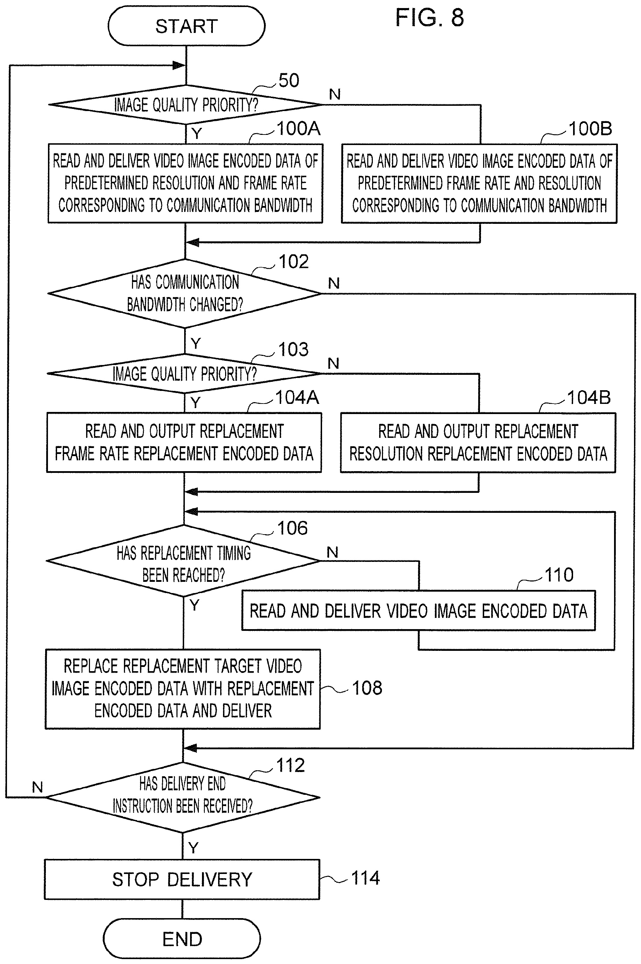

Explanation follows regarding operation of the second exemplary embodiment. Fig. 8 illustrates a flow chart of video image data delivery processing according to the second exemplary embodiment. The video image delivery data processing illustrated in Fig. 8 differs from the video image data delivery processing illustrated in Fig. 5 in the processing of steps 50, 100A, 100B, 104A, 104B. Since other processing is similar to the video image data delivery processing illustrated in Fig. 5, detailed explanation thereof is omitted.

When a user has requested video image delivery through operation of the terminal device 18, the priority data is set as the video image viewing mode to indicate whether to prioritize image quality or to prioritize smoothness. The setting section 38 sends the priority data set by the user together with a video image delivery request to the video image data delivery device 12.

Upon receipt of the video image encoded data delivery request with encoding parameters stipulated by the user and the priority data from the terminal device 18, the video image data delivery device 12 executes the video image data delivery processing illustrated in Fig. 8.

At step 50, determination is made as to whether or not the priority data received from the terminal device 18 is data indicating image quality priority. Processing transitions to step 100A when the priority data is data indicating image quality priority, and processing transitions to step 100B when the priority data is not data indicating image quality priority, namely when the priority data is data indicating smoothness priority.

At step 100A, the delivery section 20 reads video image encoded data from the video image encoded data storage section 24 in predetermined units at a predetermined resolution, for example at resolution A1, and at a frame rate corresponding to the communication bandwidth, and performs streaming delivery to the terminal device 18.

At step 100B, the delivery section 20 reads video image encoded data from the video image encoded data storage section 24 in predetermined units at a predetermined frame rate, for example at frame rate C1, and at a resolution corresponding to the communication bandwidth, and performs streaming delivery to the terminal device 18.

At step 102, determination is made as to whether or not the communication bandwidth has changed. Processing transitions to step 103 when determined that the communication bandwidth has changed, and processing transitions to step 112 when determined that the communication bandwidth has not changed.

At step 103, similarly to at step 50, determination is made as to whether or not the priority data received from the terminal device 18 is data indicating image quality priority. Processing transitions to step 104A when the priority data is data indicating image quality priority, and processing transitions to step 104B when the priority data is not data indicating image quality priority, namely when the priority data is data indicating smoothness priority.

At step 104A, the replacement section 22 reads replacement encoded data from the replacement encoded data storage section 26 at a replacement frame rate that changes in steps between the frame rate of the communication bandwidth prior to changing and the frame rate of the communication bandwidth after changing. The read replacement encoded data is then output to the delivery section 20.

At step 104B, the replacement section 22 reads replacement encoded data from the replacement encoded data storage section 26 at a replacement resolution that changes in steps between the resolution of the communication bandwidth prior to changing and the resolution of the communication bandwidth after changing. The read replacement encoded data is then output to the delivery section 20. Processing of the subsequent steps 106 to 114 is similar to the processing of Fig. 5.

Video image delivery can accordingly be provided in accordance with the wishes of the user since the user is able to set whether image quality is prioritized or whether smoothness is prioritized during video image delivery.

Note that in the above explanation, explanation has been given regarding a case in which video image data delivery conforms to MPEG-DASH standard as the video streaming standard, however there is no limitation thereto, and configuration may be made to conform to any standard that allows switching of encoding parameters during video image reproduction.

Moreover, in the present exemplary embodiment, explanation has been given regarding a case in which the video image data delivery device 12 and the storage device 14 are configured by separate devices, however configuration may be made with the storage device 14 provided to the video image data delivery device 12.

Moreover in the present exemplary embodiment, explanation has been given regarding a case in which the bandwidth measurement section 36 is provided to the terminal device 18, however there is no limitation thereto and the bandwidth measurement section 36 may be provided to the video image data delivery device 12.

In the present exemplary embodiment, explanation has been given regarding a case in which the replacement encoded data is pre-stored in the replacement encoded data storage section 26, however configuration may be made such that replacement encoded data on the lower resolution side is not pre-stored, but is generated by intra-frame prediction encoding performed at replacement.

For example, replacement encoded data at the replacement resolution B6 may be generated from video image encoded data at resolution A1 or A2 stored in the video image encoded data storage section 24. Moreover, replacement encoded data at the replacement resolution B6 may be generated from replacement encoded data at any of the replacement resolutions B1 to B5 that are stored in the replacement encoded data storage section 26.

Moreover, explanation has been given regarding embodiments in which the video image data delivery program 80 that is an example of an video image data delivery program of technology disclosed herein is pre-stored (installed) in the storage section 76, however there is no limitation thereto. The video image data delivery program of technology disclosed herein may be supplied in a format stored on a storage medium such as a CD-ROM or a DVD-ROM.

Technology disclosed herein obtains the advantageous effect of enabling abrupt changes in encoding parameters to be suppressed, even when communication bandwidth changes during video image reproduction.

## Claims

1. A video image data delivery system (10) comprising:
an encoding device (16) that includes:
a normal encoding section (28) that encodes a video image (32) which includes a plurality of frame images that are segmented into a plurality of segments, using a predetermined encoding method with a plurality of different first encoding parameters (A1 to A3) corresponding to a plurality of different communication bandwidths for communication with a terminal device (18), the different encoding parameters including at least one of resolution or frame rate, and
an intra-frame prediction encoding section (30) that encodes a predetermined number (a) of frame images that consecutively precede a final frame image (Fn) in each segment of the video image (32) using intra-frame prediction encoding performed at each of a plurality of second encoding parameters (B1 to Bj), the plurality of second encoding parameters (B1 to Bj) being different from the plurality of first encoding parameters (A1 to A3) and that change stepwise between different first encoding parameters in a manner that suppresses an abrupt change that occurs in a transition between segments encoded with the different first parameters, and each frame image that is encoded by intra-frame prediction encoding being encoded using pixel data within a single frame image without reference to other frame images;
a storage device (14) that includes:
a video image encoded data storage section (24) that stores a video image encoded data that is encoded by the normal encoding section (28), and
a replacement encoded data storage section (26) that stores a replacement encoded data that is encoded by the intra-frame prediction encoding section (30); and
a video image data delivery device (12) that includes:
a delivery section (20) that reads, from the video image encoded data storage section (24), the video image encoded data encoded with one of the plurality of first encoding parameter corresponding to a communication bandwidth for communication with the terminal device (18) and delivers, to the terminal device (18), the video image encoded data that has been read, and
a replacement section (22) that, when instructed by the terminal device (18) to switch to delivery of video image encoded data with different first encoding parameter reads, from the replacement encoded data storage section (26), the replacement encoded data encoded with a plurality of second encoding parameters that change stepwise from the first encoding parameters corresponding to the communication bandwidth prior to the switch instruction to the first encoding parameters corresponding to the communication bandwidth following the switch instruction, and replaces, in the video encoded data, a predetermined number (a) of frame images that consecutively precede a final frame image (Fn) in the segment for which the switching has been instructed with the replacement encoded data that has been read.

2. The video image data delivery device of claim 1, wherein:
the replacement encoded data is data of the replacement target frame images encoded using intra-frame prediction encoding.

3. The video image data delivery device of claim 1 or claim 2, further comprising:
the video image encoded data storage section (24) storing the plurality of sets of video image encoded data; and
the replacement encoded data storage section (26) that stores replacement encoded data of replacement target frame images of a portion in a latter half of each of the segments, including a final frame image and consecutive previous frames, encoded with the replacement encoding parameters; wherein:
the delivery section reads from the video image encoded data storage section, and delivers to the terminal device the video image encoded data of the one or more encoding parameters corresponding to the communication bandwidth are performed; and
when instructed to switch so as to deliver video image encoded data with one or more different encoding parameters, the replacement section reads the replacement encoded data of the replacement target frame images from the replacement encoded data storage section, and replaces the video image encoded data of the replacement target frame images with the read replacement encoded data are performed.

4. The video image data delivery device of any one of claim 1 to claim 3, wherein:
the encoding parameter is the frame rate; and
when the video image encoded data of the replacement target frame images is replaced with replacement encoded data of a plurality of replacement frame rates, a given one or more of the plurality of replacement frame rates is replaced with replacement encoded data that is thinned from replacement encoded data of another replacement frame rate higher than the given one or more replacement frame rates.

5. The video image data delivery device of any one of claim 1 to claim 4, wherein:
during delivery of the video image encoded data to the terminal device:
in cases in which the delivery device has been instructed from the terminal device to prioritize image quality of the video image as a viewing mode of the video image, the video image encoded data is delivered to the terminal device at a predetermined resolution and at a frame rate corresponding to the communication bandwidth, and in cases in which the delivery device has been instructed from the terminal device to prioritize smoothness of the video image as the viewing mode of the video image, the video image encoded data is delivered to the terminal device at a predetermined frame rate and at a resolution corresponding to the communication bandwidth; and
during replacement with the replacement encoded data:
in cases in which the delivery device has been instructed from the terminal device to prioritize image quality of the video image as the viewing mode of the video image, when the delivery device has been instructed to switch so as to deliver video image encoded data of a different encoding parameter, replacing the video image encoded data of the replacement target frame images that will be delivered first following the switch instruction with replacement encoded data of the replacement target frame images encoded with replacement frame rates that change stepwise from a frame rate corresponding to the communication bandwidth prior to the switch instruction to a frame rate corresponding to the communication bandwidth following the switch instruction is performed; and
in cases in which the delivery device has been instructed from the terminal device to prioritize smoothness of the video image as the viewing mode of the video image, when the delivery device has been instructed to switch so as to deliver video image encoded data of a different encoding parameter, replacing the video image encoded data of the replacement target frame images that will be delivered first following the switch instruction with replacement encoded data of the replacement target frame images encoded with replacement resolutions that change stepwise from a resolution corresponding to the communication bandwidth prior to the switch instruction to a resolution corresponding to the communication bandwidth following the switch instruction is performed.

6. A video image data delivery method comprising:
encoding a video image (32) which includes a plurality of frame images that are segmented into a plurality of segments, using a predetermined encoding method with a plurality of different first encoding parameters (A1 to A3) corresponding to a plurality of different communication bandwidths for communication with a terminal device (18), the different encoding parameters including at least one of resolution or frame rate, and
encoding a predetermined number (a) of frame images that consecutively precede a final frame image (Fn) in each segment of the video image (32) using intra-frame prediction encoding performed at each of a plurality of second encoding parameters (B1 to Bj), the plurality of second encoding parameters (B1 to Bj) being different from the plurality of first encoding parameters (A1 to A3) and that change stepwise between different first encoding parameters in a manner that suppresses an abrupt change that occurs in a transition between segments encoded with the different first parameters, and each frame image that is encoded by intra-frame prediction encoding being encoded using pixel data within a single frame image without reference to other frame images;
storing a video image encoded data that is encoded by the normal encoding section (28), and
storing a replacement encoded data that is encoded by the intra-frame prediction encoding section (30); and
reading, from a video image encoded data storage section (24), the video image encoded data encoded with one of the plurality of first parameter corresponding to a communication bandwidth for communication with the terminal device (18) and delivering, to the terminal device (18), the video image encoded data that has been read; and
when instructed by the terminal device (18) to switch to delivery of video image encoded data with different first encoding parameter reading, from the replacement encoded data storage section (26), the replacement encoded data encoded with a plurality of second encoding parameters that change stepwise from the first encoding parameters corresponding to the communication bandwidth prior to the switch instruction to the first encoding parameters corresponding to the communication bandwidth following the switch instruction, and replacing, in the video encoded data, a predetermined number (a) of frame images that consecutively precede a final frame image (Fn) in the segment for which the switching has been instructed with the replacement encoded data that has been read.

7. The video image data delivery method of claim 6, wherein:
the replacement encoded data is data of the replacement target frame images encoded using intra-frame prediction encoding.

8. The video image data delivery method of claim 6 or claim 7, wherein:
during delivery of the video image encoded data to the terminal device, reading from a video image encoded data storage section storing the plurality of sets of video image encoded data and delivering to the terminal device the video image encoded data of the one or more encoding parameters corresponding to the communication bandwidth are performed; and
during replacement with the replacement encoded data, when instructed by a processor to switch so as to deliver video image encoded data with one or more different encoding parameters, reading the replacement encoded data of the replacement target frame images from the replacement encoded data storage section storing replacement encoded data of replacement target frame images of a portion in a latter half of each of the segments consecutive to a final frame image of each of the segments, and replacing the video image encoded data of the replacement target frame images with the read replacement encoded data are performed.

9. The video image data delivery method of any one of claim 6 to claim 8, wherein:
during replacement with the replacement encoded data, when the video image encoded data of the replacement target frame images is replaced by a processor with replacement encoded data of a plurality of replacement frame rates, a given one or more of the plurality of replacement frame rates is replaced with replacement encoded data that is thinned from replacement encoded data of another replacement frame rate higher than the given one or more replacement frame rates.

10. The video image data delivery method of any one of claim 6 to claim 9, wherein:
the encoding parameters are the resolution and the frame rate, and during delivery of the video image encoded data to the terminal device:
in cases in which the delivery device has been instructed from the terminal device to prioritize image quality of the video image as a viewing mode of the video image, the video image encoded data is delivered to the terminal device at a predetermined resolution and at a frame rate corresponding to the communication bandwidth, and in cases in which the delivery device has been instructed from the terminal device to prioritize smoothness of the video image as the viewing mode of the video image, the video image encoded data is delivered to the terminal device at a predetermined frame rate and at a resolution corresponding to the communication bandwidth; and
during replacement with the replacement encoded data:
in cases in which the delivery device has been instructed from the terminal device to prioritize image quality of the video image as the viewing mode of the video image, when the delivery device has been instructed to switch so as to deliver video image encoded data of a different encoding parameter, replacing the video image encoded data of the replacement target frame images that will be delivered first following the switch instruction with replacement encoded data of the replacement target frame images encoded with replacement frame rates that change stepwise from a frame rate corresponding to the communication bandwidth prior to the switch instruction to a frame rate corresponding to the communication bandwidth following the switch instruction is performed; and
in cases in which the delivery device has been instructed from the terminal device to prioritize smoothness of the video image as the viewing mode of the video image, when the delivery device has been instructed to switch so as to deliver video image encoded data of a different encoding parameter, replacing the video image encoded data of the replacement target frame images that will be delivered first following the switch instruction with replacement encoded data of the replacement target frame images encoded with replacement resolutions that change stepwise from a resolution corresponding to the communication bandwidth prior to the switch instruction to a resolution corresponding to the communication bandwidth following the switch instruction is performed.

11. A program for causing a computer to execute an image data delivery process, the process comprising:
encoding a video image (32) which includes a plurality of frame images that are segmented into a plurality of segments, using a predetermined encoding method with a plurality of different first encoding parameters (A1 to A3) corresponding to a plurality of different communication bandwidths for communication with a terminal device (18), the different encoding parameters including at least one of resolution or frame rate, and
encoding a predetermined number (a) of frame images that consecutively precede a final frame image (Fn) in each segment of the video image (32) using intra-frame prediction encoding performed at each of a plurality of second encoding parameters (B1 to Bj), the plurality of second encoding parameters (B1 to Bj) being different from the plurality of first encoding parameters (A1 to A3) and that change stepwise between different first encoding parameters in a manner that suppresses an abrupt change that occurs in a transition between segments encoded with the different first parameters, and each frame image that is encoded by intra-frame prediction encoding being encoded using pixel data within a single frame image without reference to other frame images;
storing a video image encoded data that is encoded by the normal encoding section (28), and
storing a replacement encoded data that is encoded by the intra-frame prediction encoding section (30); and
reading, from a video image encoded data storage section (24), the video image encoded data encoded with one of the plurality of first encoding parameter corresponding to a communication bandwidth for communication with the terminal device (18) and delivering, to the terminal device (18), the video image encoded data that has been read; and
when instructed by the terminal device (18) to switch to delivery of video image encoded data with different first encoding parameters reading, from the replacement encoded data storage section (26), the replacement encoded data encoded with a plurality of second encoding parameters that change stepwise from the first encoding parameters corresponding to the communication bandwidth prior to the switch instruction to the first encoding parameters corresponding to the communication bandwidth following the switch instruction, and replacing, in the video encoded data, a predetermined number (a) of frame images that consecutively precede a final frame image (Fn) in the segment for which the switching has been instructed with the replacement encoded data that has been read.

## Patentansprüche

1. Videobilddaten-Bereitstellungssystem (10), umfassend:
eine Codiervorrichtung (16), welche einschließt:
einen normalen Codierabschnitt (28), der ein Videobild (32), das eine Vielzahl von Einzelbildern einschließt, die in eine Vielzahl von Segmenten segmentiert sind, unter Verwendung eines vorbestimmten Codierverfahrens mit einer Vielzahl von unterschiedlichen ersten Codierparametern (A1 bis A3), die einer Vielzahl von unterschiedlichen Kommunikationsbandbreiten für Kommunikation mit einer Endgerätevorrichtung (18) entsprechen, codiert, wobei die unterschiedlichen Codierparameter mindestens eines aus Auflösung oder Bildrate einschließen, und
einen Intra-Bildvorhersage-Codierabschnitt (30), der eine vorbestimmte Anzahl (a) von Einzelbildern, die nacheinander einem endgültigen Einzelbild (Fn) in jedem Segment des Videobildes (32) vorausgehen, unter Verwendung von Intra-Bildvorhersage-Codierung, die an jedem aus einer Vielzahl von zweiten Codierparametern (B1 bis Bj) durchgeführt wird, codiert, wobei sich die Vielzahl von zweiten Codierparametern (B1 bis Bj) von der Vielzahl von ersten Codierparametern (A1 bis A3) unterscheidet, und die sich schrittweise zwischen unterschiedlichen ersten Codierparametern in einer Art verändern, die eine abrupte Veränderung, welche in einem Übergang zwischen Segmenten auftritt, die mit den unterschiedlichen ersten Parametern codiert sind, unterdrückt, und wobei jedes Einzelbild, das mit Intra-Bildvorhersage-Codierung codiert wird, unter Verwendung von Pixeldaten innerhalb eines einzigen Einzelbildes ohne Bezugnahme auf andere Einzelbilder codiert wird;
eine Speichervorrichtung (14), welche einschließt:
einen Speicherabschnitt (24) für codierte Videobilddaten, der codierte Videobilddaten speichert, die vom normalen Codierabschnitt (28) codiert werden, und
einen Speicherabschnitt (26) für codierte Ersatzdaten, der codierte Ersatzdaten speichert, die vom Intra-Bildvorhersage-Codierabschnitt (30) codiert werden; und
eine Videobilddaten-Bereitstellungsvorrichtung (12), welche einschließt:
einen Bereitstellungsabschnitt (20), der aus dem Speicherabschnitt (24) für codierte Videobilddaten die codierten Videobilddaten, die mit einem aus der Vielzahl von ersten Codierparameter, die einer Kommunikationsbandbreite für Kommunikation mit der Endgerätevorrichtung (18) entsprechen, codiert sind, ausliest und die codierten Videobilddaten, die ausgelesen wurden, der Endgerätevorrichtung (18) bereitstellt, und
einen Ersetzungsabschnitt (22), der, wenn er von der Endgerätevorrichtung (18) dazu angewiesen wird, auf Bereitstellung von codierten Videobilddaten mit unterschiedlichen ersten Codierparametern umzuschalten, aus dem Speicherabschnitt (26) für codierte Ersatzdaten die codierten Ersatzdaten ausliest, die mit einer Vielzahl von zweiten Codierparametern codiert sind, die sich schrittweise von den ersten Codierparametern, die der Kommunikationsbandbreite vor der Umschaltanweisung entsprechen, zu den ersten Codierparametern verändern, die der Kommunikationsbandbreite nach der Umschaltanweisung entsprechen, und in den codierten Videodaten eine vorbestimmte Anzahl (a) von Einzelbildern, die nacheinander einem endgültigen Einzelbild (Fn) in dem Segment, für das die Umschaltung angewiesen wurde, vorausgehen, durch die codierten Ersatzdaten ersetzt, die ausgelesen wurden.

2. Videobilddaten-Bereitstellungsvorrichtung nach Anspruch 1, wobei:
die codierten Ersatzdaten Daten der Ersatzzieleinzelbilder sind, die unter Verwendung von Intra-Bildvorhersage-Codierung codiert sind.

3. Videobilddaten-Bereitstellungsvorrichtung nach Anspruch 1 oder Anspruch 2, weiter umfassend:
den Speicherabschnitt (24) für codierte Videobilddaten, der die Vielzahl von Sätzen codierter Videobilddaten speichert; und
den Speicherabschnitt (26) für codierte Ersatzdaten, der codierte Ersatzdaten von Ersatzzieleinzelbildern eines Abschnitts in einer zweiten Hälfte jedes der Segmente speichert, die ein endgültiges Einzelbild und aufeinanderfolgende vorhergehende Einzelbilder einschließt, die mit den Ersatz-Codierparametern codiert sind; wobei:
der Bereitstellungsabschnitt die codierten Videobilddaten des einen oder der mehreren Codierparameter, die der Kommunikationsbandbreite entsprechen, aus dem Speicherabschnitt für codierte Videobilddaten ausliest und der Endgerätevorrichtung bereitstellt, durchgeführt werden; und
der Ersetzungsabschnitt, wenn er dazu angewiesen wird, umzuschalten, um codierte Videobilddaten mit einem oder mehreren unterschiedlichen Codierparametern bereitzustellen, die codierten Ersatzdaten der Ersatzzieleinzelbilder aus dem Speicherabschnitt für codierte Ersatzdaten ausliest, und die codierten Videobilddaten der Ersatzzieleinzelbilder durch die ausgelesenen codierten Ersatzdaten ersetzt, durchgeführt werden.

4. Videobilddaten-Bereitstellungsvorrichtung nach einem aus Anspruch 1 bis Anspruch 3, wobei:
der Codierparameter die Bildrate ist; und
wenn die codierten Videobilddaten der Ersatzzieleinzelbilder durch codierte Ersatzdaten einer Vielzahl von Ersatzbildraten ersetzt werden, eine gegebene oder mehrere aus der Vielzahl von Ersatzbildraten durch codierte Ersatzdaten ersetzt werden, die aus codierten Ersatzdaten einer anderen Ersatzbildrate, die höher ist als die gegebene eine oder die mehreren Ersatzbildraten, ausgedünnt werden.

5. Videobilddaten-Bereitstellungsvorrichtung nach einem aus Anspruch 1 bis Anspruch 4, wobei:
während des Bereitstellens der codierten Videobilddaten an die Endgerätevorrichtung:
in Fällen, in denen die Bereitstellungsvorrichtung von der Endgerätevorrichtung dazu angewiesen wurde, Bildqualität des Videobildes als einen Anzeigemodus des Videobildes zu priorisieren, die codierten Videobilddaten der Endgerätevorrichtung mit einer vorbestimmten Auflösung und mit einer Bildrate bereitgestellt werden, die der Kommunikationsbandbreite entspricht, und in Fällen, in denen die Bereitstellungsvorrichtung von der Endgerätevorrichtung dazu angewiesen wurde, Glätte des Videobildes als den Anzeigemodus des Videobildes zu priorisieren, die codierten Videobilddaten der Endgerätevorrichtung mit einer vorbestimmten Bildrate und mit einer Auflösung bereitgestellt werden, die der Kommunikationsbandbreite entspricht; und
während des Ersetzens durch die codierten Ersatzdaten:
in Fällen, in denen die Bereitstellungsvorrichtung von der Endgerätevorrichtung dazu angewiesen wurde, Bildqualität des Videobildes als den Anzeigemodus des Videobildes zu priorisieren, wenn die Bereitstellungsvorrichtung dazu angewiesen wurde, umzuschalten, um codierte Videobilddaten eines unterschiedlichen Codierparameters bereitzustellen, das Ersetzen der codierten Videobilddaten der Ersatzzieleinzelbilder, die nach der Umschaltanweisung zuerst bereitgestellt werden, durch codierte Ersatzdaten der Ersatzzieleinzelbilder, die mit Ersatzbildraten codiert sind, die sich schrittweise von einer Bildrate, die der Kommunikationsbandbreite vor der Umschaltanweisung entspricht, zu einer Bildrate verändern, die der Kommunikationsbandbreite nach der Umschaltanweisung entspricht, durchgeführt wird; und
in Fällen, in denen die Bereitstellungsvorrichtung von der Endgerätevorrichtung dazu angewiesen wurde, Glätte des Videobildes als den Anzeigemodus des Videobildes zu priorisieren, wenn die Bereitstellungsvorrichtung dazu angewiesen wurde, umzuschalten, um codierte Videobilddaten eines unterschiedlichen Codierparameters bereitzustellen, das Ersetzen der codierten Videobilddaten der Ersatzzieleinzelbilder, die nach der Umschaltanweisung zuerst bereitgestellt werden, durch codierte Ersatzdaten der Ersatzzieleinzelbilder, die mit Ersatzauflösungen codiert sind, die sich schrittweise von einer Auflösung, die der Kommunikationsbandbreite vor der Umschaltanweisung entspricht, zu einer Auflösung verändern, die der Kommunikationsbandbreite nach der Umschaltanweisung entspricht, durchgeführt wird.

6. Videobilddaten-Bereitstellungsverfahren, umfassend:
Codieren eines Videobildes (32), das eine Vielzahl von Einzelbildern einschließt, die in eine Vielzahl von Segmenten segmentiert sind, unter Verwendung eines vorbestimmten Codierverfahrens mit einer Vielzahl von unterschiedlichen ersten Codierparametern (A1 bis A3), die einer Vielzahl von unterschiedlichen Kommunikationsbandbreiten für Kommunikation mit einer Endgerätevorrichtung (18) entsprechen, wobei die unterschiedlichen Codierparameter mindestens eines aus Auflösung oder Bildrate einschließen, und
Codieren einer vorbestimmten Anzahl (a) von Einzelbildern, die nacheinander einem endgültigen Einzelbild (Fn) in jedem Segment des Videobildes (32) vorausgehen, unter Verwendung von Intra-Bildvorhersage-Codierung, die an jedem aus einer Vielzahl von zweiten Codierparametern (B1 bis Bj) durchgeführt wird, wobei sich die Vielzahl von zweiten Codierparametern (B1 bis Bj) von der Vielzahl von ersten Codierparametern (A1 bis A3) unterscheidet, und die sich schrittweise zwischen unterschiedlichen ersten Codierparametern in einer Art verändern, die eine abrupte Veränderung, welche in einem Übergang zwischen Segmenten auftritt, die mit den unterschiedlichen ersten Parametern codiert sind, unterdrückt, und wobei jedes Einzelbild, das mit Intra-Bildvorhersage-Codierung codiert wird, unter Verwendung von Pixeldaten innerhalb eines einzigen Einzelbildes ohne Bezugnahme auf andere Einzelbilder codiert wird;
Speichern von codierten Videobilddaten, die vom normalen Codierabschnitt (28) codiert werden, und
Speichern von codierten Ersatzdaten, die vom Intra-Bildvorhersage-Codierabschnitt (30) codiert werden; und
Auslesen der codierten Videobilddaten, die mit einem aus der Vielzahl von ersten Codierparameter, die einer Kommunikationsbandbreite für Kommunikation mit der Endgerätevorrichtung (18) entsprechen, codiert sind, aus einem Speicherabschnitt (24) für codierte Videobilddaten, und Bereitstellen der codierten Videobilddaten, die ausgelesen wurden, an die Endgerätevorrichtung (18); und
bei Anweisung durch die Endgerätevorrichtung (18) dazu, auf Bereitstellung von codierten Videobilddaten mit unterschiedlichen ersten Codierparametern umzuschalten, Auslesen der codierten Ersatzaten, die mit einer Vielzahl von zweiten Codierparametern codiert sind, die sich schrittweise von den ersten Codierparametern, die der Kommunikationsbandbreite vor der Umschaltanweisung entsprechen, zu den ersten Codierparametern verändern, die der Kommunikationsbandbreite nach der Umschaltanweisung entsprechen, aus dem Speicherabschnitt (26) für codierte Ersatzdaten, und Ersetzen einer vorbestimmten Anzahl (a) von Einzelbildern, die nacheinander einem letzten Einzelbild (Fn) in dem Segment, für das die Umschaltung angewiesen wurde, vorausgehen, in den codierten Videodaten durch die codierten Ersatzdaten, die ausgelesen wurden.

7. Videobilddaten-Bereitstellungsverfahren nach Anspruch 6, wobei:
die codierten Ersatzdaten Daten der Ersatzzieleinzelbilder sind, die unter Verwendung von Intra-Bildvorhersage-Codierung codiert sind.

8. Videobilddaten-Bereitstellungsverfahren nach Anspruch 6 oder Anspruch 7, wobei:
während des Bereitstellens der codierten Videobilddaten an die Endgerätevorrichtung das Auslesen der codierten Videobilddaten des einen oder der mehreren Codierparameter, die der Kommunikationsbandbreite entsprechen, aus einem Speicherabschnitt für codierte Videobilddaten, der die Vielzahl von Sätzen videobildcodierter Daten speichert, und Bereitstellen an die Endgerätevorrichtung durchgeführt werden; und
während des Ersetzens durch die codierten Ersatzdaten bei Anweisung durch einen Prozessor dazu, umzuschalten, um codierte Videobilddaten mit einem oder mehreren unterschiedlichen Codierparametern bereitzustellen, das Auslesen der codierten Ersatzdaten der Ersatzzieleinzelbilder aus dem Speicherabschnitt für codierte Ersatzdaten, der codierte Ersatzdaten von Ersatzzieleinzelbildern eines Abschnitts in einer zweiten Hälfte jedes der Segmente nacheinander bis zu einem endgültigen Einzelbild jedes der Segmente speichert, und Ersetzen der codierten Videobilddaten der Ersatzzieleinzelbilder mit den ausgelesenen codierten Ersatzdaten durchgeführt werden.

9. Videobilddaten-Bereitstellungsverfahren nach einem aus Anspruch 6 bis Anspruch 8, wobei:
während des Ersetzens durch die codierten Ersatzdaten, wenn die codierten Videobilddaten der Ersatzzieleinzelbilder von einem Prozessor durch codierte Ersatzdaten einer Vielzahl von Ersatzbildraten ersetzt werden, eine gegebene oder mehrere aus der Vielzahl von Ersatzbildraten durch codierte Ersatzdaten ersetzt werden, die aus codierten Ersatzdaten einer anderen Ersatzbildrate, die höher ist als die gegebene eine oder die mehreren Ersatzbildraten, ausgedünnt werden.

10. Videobilddaten-Bereitstellungsverfahren nach einem aus Anspruch 6 bis Anspruch 9, wobei:
die Codierparameter die Auflösung und die Bildrate sind, und während des Bereitstellens der codierten Videobilddaten an die Endgerätevorrichtung:
in Fällen, in denen die Bereitstellungsvorrichtung von der Endgerätevorrichtung dazu angewiesen wurde, Bildqualität des Videobildes als einen Anzeigemodus des Videobildes zu priorisieren, die codierten Videobilddaten der Endgerätevorrichtung mit einer vorbestimmten Auflösung und mit einer Bildrate bereitgestellt werden, die der Kommunikationsbandbreite entspricht, und in Fällen, in denen die Bereitstellungsvorrichtung von der Endgerätevorrichtung dazu angewiesen wurde, Glätte des Videobildes als den Anzeigemodus des Videobildes zu priorisieren, die codierten Videobilddaten der Endgerätevorrichtung mit einer vorbestimmten Bildrate und mit einer Auflösung bereitgestellt werden, die der Kommunikationsbandbreite entspricht; und
während des Ersetzens mit den codierten Ersatzdaten:
in Fällen, in denen die Bereitstellungsvorrichtung von der Endgerätevorrichtung dazu angewiesen wurde, Bildqualität des Videobildes als den Anzeigemodus des Videobildes zu priorisieren, wenn die Bereitstellungsvorrichtung dazu angewiesen wurde, umzuschalten, um codierte Videobilddaten eines unterschiedlichen Codierparameters bereitzustellen, das Ersetzen der codierten Videobilddaten der Ersatzzieleinzelbilder, die nach der Umschaltanweisung zuerst bereitgestellt werden, durch codierte Ersatzdaten der Ersatzzieleinzelbilder, die mit Ersatzbildraten codiert sind, die sich schrittweise von einer Bildrate, die der Kommunikationsbandbreite vor der Umschaltanweisung entspricht, zu einer Bildrate verändern, die der Kommunikationsbandbreite nach der Umschaltanweisung entspricht, durchgeführt wird; und
in Fällen, in denen die Bereitstellungsvorrichtung von der Endgerätevorrichtung dazu angewiesen wurde, Glätte des Videobildes als den Anzeigemodus des Videobildes zu priorisieren, wenn die Bereitstellungsvorrichtung dazu angewiesen wurde, umzuschalten, um codierte Videobilddaten eines unterschiedlichen Codierparameters bereitzustellen, das Ersetzen der codierten Videobilddaten der Ersatzzieleinzelbilder, die nach der Umschaltanweisung zuerst bereitgestellt werden, durch codierte Ersatzdaten der Ersatzzieleinzelbilder, die mit Ersatzauflösungen codiert sind, die sich schrittweise von einer Auflösung, die der Kommunikationsbandbreite vor der Umschaltanweisung entspricht, zu einer Auflösung verändern, die der Kommunikationsbandbreite nach der Umschaltanweisung entspricht, durchgeführt wird.

11. Programm, um einen Computer dazu zu bringen, einen Bilddatenbereitstellungsprozess auszuführen, wobei der Prozess umfasst:
Codieren eines Videobildes (32), das eine Vielzahl von Einzelbildern einschließt, die in eine Vielzahl von Segmenten segmentiert sind, unter Verwendung eines vorbestimmten Codierverfahrens mit einer Vielzahl von unterschiedlichen ersten Codierparametern (A1 bis A3), die einer Vielzahl von unterschiedlichen Kommunikationsbandbreiten für Kommunikation mit einer Endgerätevorrichtung (18) entsprechen, wobei die unterschiedlichen Codierparameter mindestens eines aus Auflösung oder Bildrate einschließen, und
Codieren einer vorbestimmten Anzahl (a) von Einzelbildern, die nacheinander einem endgültigen Einzelbild (Fn) in jedem Segment des Videobildes (32) vorausgehen, unter Verwendung von Intra-Bildvorhersage-Codierung, die an jedem aus einer Vielzahl von zweiten Codierparametern (B1 bis Bj) durchgeführt wird, wobei sich die Vielzahl von zweiten Codierparametern (B1 bis Bj) von der Vielzahl von ersten Codierparametern (A1 bis A3) unterscheidet, und die sich schrittweise zwischen unterschiedlichen ersten Codierparametern in einer Art verändern, die eine abrupte Veränderung, welche in einem Übergang zwischen Segmenten auftritt, die mit den unterschiedlichen ersten Parametern codiert sind, unterdrückt, und wobei jedes Einzelbild, das mit Intra-Bildvorhersage-Codierung codiert wird, unter Verwendung von Pixeldaten innerhalb eines einzigen Einzelbildes ohne Bezugnahme auf andere Einzelbilder codiert wird;
Speichern von codierten Videobilddaten, die vom normalen Codierabschnitt (28) codiert werden, und
Speichern von codierten Ersatzdaten, die vom Intra-Bildvorhersage-Codierabschnitt (30) codiert werden; und
Auslesen der codierten Videobilddaten, die mit einem aus der Vielzahl von ersten Codierparameter, die einer Kommunikationsbandbreite für Kommunikation mit der Endgerätevorrichtung (18) entsprechen, codiert sind, aus einem Speicherabschnitt (24) für codierte Videobilddaten, und Bereitstellen der codierten Videobilddaten, die ausgelesen wurden, an die Endgerätevorrichtung (18); und
bei Anweisung durch die Endgerätevorrichtung (18) dazu, auf Bereitstellung von codierten Videobilddaten mit unterschiedlichen ersten Codierparametern umzuschalten, Auslesen der codierten Ersatzdaten, die mit einer Vielzahl von zweiten Codierparametern codiert sind, die sich schrittweise von den ersten Codierparametern, die der Kommunikationsbandbreite vor der Umschaltanweisung entsprechen, zu den ersten Codierparametern verändern, die der Kommunikationsbandbreite nach der Umschaltanweisung entsprechen, aus dem Speicherabschnitt (26) für codierte Ersatzdaten , und Ersetzen einer vorbestimmten Anzahl (a) von Einzelbildern, die nacheinander einem endgültigen Einzelbild (Fn) in dem Segment, für das die Umschaltung angewiesen wurde, vorausgehen, in den codierten Videodaten mit den codierten Ersatzdaten, die ausgelesen wurden.

## Revendications

1. Système de distribution de données d'image vidéo (10) comprenant :
un dispositif de codage (16) qui inclut :
une section de codage normal (28) qui code une image vidéo (32) qui inclut une pluralité d'images de trame qui sont segmentées en une pluralité de segments, en utilisant un procédé de codage prédéterminé avec une pluralité de premiers différents paramètres de codage (A1 à A3) correspondant à une pluralité de largeurs de bande de communication différentes pour une communication avec un dispositif terminal (18), les différents paramètres de codage incluant au moins une parmi une résolution ou une fréquence de trame, et
une section de codage de prédiction intra-trame (30) qui code un nombre prédéterminé (a) d'images de trame qui précèdent consécutivement une image de trame finale (Fn) dans chaque segment de l'image vidéo (32) en utilisant un codage de prédiction intra-trame effectué au niveau de chacun d'une pluralité de seconds paramètres de codage (B1 à Bj), la pluralité de seconds paramètres de codage (B1 à Bj) étant différente de la pluralité de premiers paramètres de codage (A1 à A3) et qui changent de manière progressive entre différents premiers paramètres de codage d'une manière qui supprime un changement brusque qui se produit dans une transition entre des segments codés avec les différents premiers paramètres, et chaque image de trame qui est codée par un codage de prédiction intra-trame étant codée en utilisant des données de pixel dans une image de trame unique sans référence à d'autres images de trame ;
un dispositif de stockage (14) qui inclut :
une section de stockage de données codées d'image vidéo (24) qui stocke des données codées d'image vidéo qui sont codées par la section de codage normal (28), et
une section de stockage de données codées de remplacement (26) qui stocke des données codées de remplacement qui sont codées par la section de codage de prédiction intra-trame (30) ; et
un dispositif de distribution de données d'image vidéo (12) qui inclut :
une section de distribution (20) qui lit, à partir de la section de stockage de données codées d'image vidéo (24), les données codées d'image vidéo codées avec l'un de la pluralité de premier paramètre de codage correspondant à une largeur de bande de communication pour une communication avec le dispositif terminal (18) et distribue, au dispositif terminal (18), les données codées d'image vidéo qui ont été lues, et
une section de remplacement (22) qui, sur instruction du dispositif terminal (18) de commuter à une distribution de données codées d'image vidéo avec un premier paramètre de codage différent, lit, à partir de la section de stockage de données codées de remplacement (26), les données codées de remplacement codées avec une pluralité de seconds paramètres de codage qui changent de manière progressive des premiers paramètres de codage correspondant à la largeur de bande de communication avant l'instruction de commutation aux premiers paramètres de codage correspondant à la largeur de bande de communication à la suite de l'instruction de commutation, et remplace, dans les données codées vidéo, un nombre prédéterminé (a) d'images de trame qui précèdent consécutivement une image de trame finale (Fn) dans le segment pour lequel la commutation a été donnée comme instruction par les données codées de remplacement qui ont été lues.

2. Dispositif de distribution de données d'image vidéo selon la revendication 1, dans lequel :
les données codées de remplacement sont des données des images de trame cible de remplacement codées en utilisant un codage de prédiction intra-trame.

3. Dispositif de distribution de données d'image vidéo selon la revendication 1 ou la revendication 2, comprenant en outre :
la section de stockage de données codées d'image vidéo (24) stockant la pluralité d'ensembles de données codées d'image vidéo ; et
la section de stockage de données codées de remplacement (26) qui stocke des données codées de remplacement d'images de trame cible de remplacement d'une partie dans une dernière moitié de chacun des segments, incluant une image de trame finale et des trames précédentes consécutives, codées avec les paramètres de codage de remplacement ; dans lequel :
la section de distribution lit à partir de la section de stockage de données codées d'image vidéo, et distribue au dispositif terminal les données codées d'image vidéo des un ou plusieurs paramètres de codage correspondant à la largeur de bande de communication sont réalisés ; et
sur instruction de commuter de manière à distribuer des données codées d'image vidéo avec un ou plusieurs paramètres de codage différents, la section de remplacement lit les données codées de remplacement des images de trame cible de remplacement à partir de la section de stockage de données codées de remplacement, et remplace les données codées d'image vidéo des images de trame cible de remplacement par les données codées de remplacement lues sont réalisés.

4. Dispositif de distribution de données d'image vidéo selon l'une quelconque de la revendication 1 à la revendication 3, dans lequel :
le paramètre de codage est la fréquence de trame ; et
lorsque les données codées d'image vidéo des images de trame cible de remplacement sont remplacées par des données codées de remplacement d'une pluralité de fréquences de trame de remplacement, une ou plusieurs données de la pluralité de fréquences de trame de remplacement sont remplacées par des données codées de remplacement qui sont amincies à partir de données codées de remplacement d'une autre fréquence de trame de remplacement supérieure aux une ou plusieurs fréquences de trame de remplacement données.

5. Dispositif de distribution de données d'image vidéo selon l'une quelconque de la revendication 1 à la revendication 4, dans lequel :
lors d'une distribution des données codées d'image vidéo au dispositif terminal :
dans des cas où le dispositif de distribution a reçu pour instruction du dispositif terminal de donner priorité à la qualité d'image de l'image vidéo en tant que mode de visualisation de l'image vidéo, les données codées d'image vidéo sont distribuées au dispositif terminal à une résolution prédéterminée et à une fréquence de trame correspondant à la largeur de bande de communication, et dans des cas où le dispositif de distribution a reçu pour instruction du dispositif terminal de donner priorité à la régularité de l'image vidéo en tant que mode de visualisation de l'image vidéo, les données codées d'image vidéo sont distribuées au dispositif terminal à une fréquence de trame prédéterminée et à une résolution correspondant à la largeur de bande de communication ; et
lors d'un remplacement par les données codées de remplacement :
dans des cas où le dispositif de distribution a reçu pour instruction du dispositif terminal de donner priorité à la qualité d'image de l'image vidéo en tant que mode de visualisation de l'image vidéo, lorsque le dispositif de distribution a reçu pour instruction de commuter de manière à distribuer des données codées d'image vidéo d'un paramètre de codage différent, un remplacement des données codées d'image vidéo des images de trame cible de remplacement qui vont être distribuées en premier après l'instruction de commutation par des données codées de remplacement des images de trame cible de remplacement codées par des fréquences de trame de remplacement qui changent de manière progressive à partir d'une fréquence de trame correspondant à la largeur de bande de communication avant l'instruction de commutation à une fréquence de trame correspondant à la largeur de bande de communication à la suite de l'instruction de commutation est exécuté ; et
dans des cas où le dispositif de distribution a reçu pour instruction du dispositif terminal de donner priorité à la régularité de l'image vidéo en tant que mode de visualisation de l'image vidéo, lorsque le dispositif de distribution a reçu pour instruction de commuter de manière à distribuer des données codées d'image vidéo d'un paramètre de codage différent, un remplacement des données codées d'image vidéo des images de trame cible de remplacement qui vont être distribuées en premier après l'instruction de commutation par des données codées de remplacement des images de trame cible de remplacement codées avec des résolutions de remplacement qui changent de manière progressive d'une résolution correspondant à la largeur de bande de communication avant l'instruction de commutation à une résolution correspondant à la largeur de bande de communication à la suite de l'instruction de commutation est exécuté.

6. Procédé de distribution de données d'image vidéo, comprenant les étapes consistant à :
coder une image vidéo (32) qui inclut une pluralité d'images de trame qui sont segmentées en une pluralité de segments, en utilisant un procédé de codage prédéterminé avec une pluralité de premiers différents paramètres de codage (A1 à A3) correspondant à une pluralité de largeurs de bande de communication différentes pour une communication avec un dispositif terminal (18), les différents paramètres de codage incluant au moins une parmi une résolution ou une fréquence de trame, et
coder un nombre prédéterminé (a) d'images de trame qui précèdent consécutivement une image de trame finale (Fn) dans chaque segment de l'image vidéo (32) en utilisant un codage de prédiction intra-trame effectué au niveau de chacun d'une pluralité de seconds paramètres de codage (B1 à Bj), la pluralité de seconds paramètres de codage (B1 à Bj) étant différente de la pluralité de premiers paramètres de codage (A1 à A3) et qui changent de manière progressive entre différents premiers paramètres de codage d'une manière qui supprime un changement brusque qui se produit dans une transition entre des segments codés avec les différents premiers paramètres, et chaque image de trame qui est codée par un codage de prédiction intra-trame étant codée en utilisant des données de pixel dans une image de trame unique sans référence à d'autres images de trame ;
stocker des données codées d'image vidéo qui sont codées par la section de codage normal (28), et
stocker des données codées de remplacement qui sont codées par la section de codage de prédiction intra-trame (30) ; et
lire, à partir d'une section de stockage de données codées d'image vidéo (24), les données codées d'image vidéo codées avec l'un de la pluralité de premier paramètre correspondant à une largeur de bande de communication pour une communication avec le dispositif terminal (18) et distribuer, au dispositif terminal (18), les données codées d'image vidéo qui ont été lues; et
sur instruction du dispositif terminal (18) de commuter à une distribution de données codées d'image vidéo avec différents premiers paramètres de codage, lire, à partir de la section de stockage de données codées de remplacement (26), les données codées de remplacement codées avec une pluralité de seconds paramètres de codage qui changent progressivement des premiers paramètres de codage correspondant à la largeur de bande de communication avant l'instruction de commutation vers les premiers paramètres de codage correspondant à la largeur de bande de communication à la suite de l'instruction de commutation, et remplacer, dans les données codées vidéo, un nombre prédéterminé (a) d'images de trame qui précèdent consécutivement une image de trame finale (Fn) dans le segment pour lequel la commutation a été donnée comme instruction par les données codées de remplacement qui ont été lues.

7. Procédé de distribution de données d'image vidéo selon la revendication 6, dans lequel :
les données codées de remplacement sont des données des images de trame cible de remplacement codées en utilisant un codage de prédiction intra-trame.

8. Procédé de distribution de données d'image vidéo selon la revendication 6 ou la revendication 7, dans lequel :
lors d'une distribution des données codées d'image vidéo au dispositif terminal, une lecture à partir d'une section de stockage de données codées d'image vidéo stockant la pluralité d'ensembles de données codées d'image vidéo et une distribution au dispositif terminal des données codées d'image vidéo des un ou plusieurs paramètres de codage correspondant à la bande passante de communication sont effectuées ; et
lors d'un remplacement par les données codées de remplacement, suite à une instruction par un processeur de commuter de manière à distribuer des données codées d'image vidéo avec un ou plusieurs paramètres de codage différents, une lecture des données codées de remplacement des images de trame cible de remplacement à partir de la section de stockage de données codées de remplacement stockant des données codées de remplacement d'images de trame cible de remplacement d'une partie dans une dernière moitié de chacun des segments consécutifs à une image de trame finale de chacun des segments, et un remplacement des données codées d'image vidéo des images de trame cible de remplacement par les données codées de remplacement lues sont effectués.

9. Procédé de distribution de données d'image vidéo selon l'une quelconque de la revendication 6 à la revendication 8, dans lequel :
lors d'un remplacement par les données codées de remplacement, lorsque les données codées d'image vidéo des images de trame de cible de remplacement sont remplacées par un processeur par des données codées de remplacement d'une pluralité de fréquences de trame de remplacement, une ou plusieurs données de la pluralité de fréquences de trame de remplacement sont remplacées par des données codées de remplacement qui sont amincies à partir de données codées de remplacement d'une autre fréquence de trame de remplacement supérieure aux une ou plusieurs fréquences de trame de remplacement données.

10. Procédé de distribution de données d'image vidéo selon l'une quelconque de la revendication 6 à la revendication 9, dans lequel :
les paramètres de codage sont la résolution et la fréquence de trame, et lors d'une distribution des données codées d'image vidéo au dispositif terminal :
dans des cas où le dispositif de distribution a reçu pour instruction du dispositif terminal de donner priorité à la qualité d'image de l'image vidéo en tant que mode de visualisation de l'image vidéo, les données codées d'image vidéo sont distribuées au dispositif terminal à une résolution prédéterminée et à une fréquence de trame correspondant à la largeur de bande de communication, et dans des cas où le dispositif de distribution a reçu pour instruction du dispositif terminal de donner priorité à la régularité de l'image vidéo en tant que mode de visualisation de l'image vidéo, les données codées d'image vidéo sont transmises au dispositif terminal à une fréquence de trame prédéterminée et à une résolution correspondant à la largeur de bande de communication ; et
lors d'un remplacement par les données codées de remplacement :
dans des cas où le dispositif de distribution a reçu pour instruction du dispositif terminal de donner priorité à la qualité d'image de l'image vidéo en tant que mode de visualisation de l'image vidéo, lorsque le dispositif de distribution a reçu pour instruction de commuter de manière à distribuer des données codées d'image vidéo d'un paramètre de codage différent, un remplacement des données codées d'image vidéo des images de trame cible de remplacement qui vont être distribuées en premier après l'instruction de commutation par des données codées de remplacement des images de trame cible de remplacement codées par des fréquences de trame de remplacement qui changent de manière progressive à partir d'une fréquence de trame correspondant à la largeur de bande de communication avant l'instruction de commutation à une fréquence de trame correspondant à la largeur de bande de communication à la suite de l'instruction de commutation est exécuté ; et
dans des cas où le dispositif de distribution a reçu pour instruction du dispositif terminal de donner priorité à la régularité de l'image vidéo en tant que mode de visualisation de l'image vidéo, lorsque le dispositif de distribution a reçu pour instruction de commuter de manière à distribuer des données codées d'image vidéo d'un paramètre de codage différent, un remplacement des données codées d'image vidéo des images de trame cible de remplacement qui vont être distribuées en premier après l'instruction de commutation par des données codées de remplacement des images de trame cible de remplacement codées avec des résolutions de remplacement qui changent de manière progressive d'une résolution correspondant à la largeur de bande de communication avant l'instruction de commutation à une résolution correspondant à la largeur de bande de communication à la suite de l'instruction de commutation est exécuté.

11. Programme pour amener un ordinateur à exécuter un processus de distribution de de données d'image, le processus comprenant les étapes consistant à :
coder une image vidéo (32) qui inclut une pluralité d'images de trame qui sont segmentées en une pluralité de segments, en utilisant un procédé de codage prédéterminé avec une pluralité de premiers différents paramètres de codage (A1 à A3) correspondant à une pluralité de largeurs de bande de communication différentes pour une communication avec un dispositif terminal (18), les différents paramètres de codage incluant au moins une parmi une résolution ou une fréquence de trame, et
coder un nombre prédéterminé (a) d'images de trame qui précèdent consécutivement une image de trame finale (Fn) dans chaque segment de l'image vidéo (32) en utilisant un codage de prédiction intra-trame effectué au niveau de chacun d'une pluralité de seconds paramètres de codage (B1 à Bj), la pluralité de seconds paramètres de codage (B1 à Bj) étant différente de la pluralité de premiers paramètres de codage (A1 à A3) et qui changent de manière progressive entre différents premiers paramètres de codage d'une manière qui supprime un changement brusque qui se produit dans une transition entre des segments codés avec les différents premiers paramètres, et chaque image de trame qui est codée par un codage de prédiction intra-trame étant codée en utilisant des données de pixel dans une image de trame unique sans référence à d'autres images de trame ;
stocker des données codées d'image vidéo qui sont codées par la section de codage normal (28), et
stocker des données codées de remplacement qui sont codées par la section de codage de prédiction intra-trame (30) ; et
lire, à partir d'une section de stockage de données codées d'image vidéo (24), les données codées d'image vidéo codées avec l'un de la pluralité de premier paramètre de codage correspondant à une largeur de bande de communication pour une communication avec le dispositif terminal (18) et distribuer, au dispositif terminal (18), les données codées d'image vidéo qui ont été lues; et
sur instruction du dispositif terminal (18) de commuter à une distribution de données codées d'image vidéo avec différents premiers paramètres de codage, lire, à partir de la section de stockage de données codées de remplacement (26), les données codées de remplacement codées avec une pluralité de seconds paramètres de codage qui changent progressivement des premiers paramètres de codage correspondant à la largeur de bande de communication avant l'instruction de commutation vers les premiers paramètres de codage correspondant à la largeur de bande de communication à la suite de l'instruction de commutation, et remplacer, dans les données codées vidéo, un nombre prédéterminé (a) d'images de trame qui précèdent consécutivement une image de trame finale (Fn) dans le segment pour lequel la commutation a été donnée comme instruction par les données codées de remplacement qui ont été lues.
